# DEMANDE DE BREVET EUROPEEN

(11) **EP 4 477 865 A1**
(43) Date de publication de la demande: **18.12.2024**
(21) Numéro de dépôt: 24157152.0
(22) Date de dépôt: 12.02.2024
(51) Int. Cl.: F02C 9/28

(54) **PROCÉDÉ DE DÉTERMINATION D'UNE MARGE DE CONSOMMATION DE CARBURANT D'UN MOTEUR PAR RAPPORT A UNE CONSOMMATION THEORIQUE**

(30) Priorité: 15.06.2023 FR 2306124
(71) Demandeur: Airbus Helicopters, 13725 Marignane Cedex (FR)
(72) Inventeur: LECAUCHOIS, Claire, 13100 AIX EN PROVENCE (FR); ESTERLE, Florent, 13300 SALON DE PROVENCE (FR)
(74) Mandataire: GPI Brevets

(57) **Abrégé**

La présente invention concerne un procédé de détermination d'une marge de consommation de carburant courante d'un moteur fonctionnel (10) d'un aéronef (1) par rapport à une consommation de carburant théorique d'un moteur de référence (99). Ce procédé comporte : a) réalisation en vol d'au moins un contrôle de santé moteur comprenant au moins une mesure d'une valeur courante d'une température de surveillance et d'une valeur de contrôle d'un paramètre de puissance dudit moteur fonctionnel (10), b) détermination en fonction au moins de la valeur de contrôle, avec un modèle de consommation appliqué par un contrôleur (42), de ladite marge de consommation de carburant courante par rapport à la consommation de carburant théorique, c) transmission à un récepteur (43) de ladite marge de consommation de carburant courante.

## Description

La présente invention concerne un procédé de détermination d'une marge de consommation de carburant d'un moteur par rapport à une consommation théorique.

Le terme « consommation » désigne par la suite un débit de carburant, tel qu'un débit volumique exprimé par exemple en litres par seconde ou un débit massique exprimé par exemple en kilogrammes par seconde.

L'invention se situe donc dans le domaine technique des installations motrices de véhicule, notamment d'un aéronef et plus particulièrement d'un giravion.

En effet, un aéronef est usuellement muni d'une installation motrice. Par exemple, un aéronef à voilure tournante comporte une installation motrice pourvue d'au moins un moteur afin de mettre en rotation une voilure tournante. Un hélicoptère est souvent équipé d'au moins un turbomoteur, dénommé parfois « turbine à gaz ».

En outre, chaque moteur est dimensionné pour pouvoir être utilisé selon au moins un régime de fonctionnement, chaque régime de fonctionnement associant une puissance développée à une durée d'utilisation. Parmi les régimes connus, on peut citer notamment :
- le régime de décollage associant une puissance maximale au décollage PMD à une durée d'utilisation de l'ordre de cinq à dix minutes,
- le régime maximal continu associant une puissance maximale en continu PMC à une durée d'utilisation illimitée.

Sur un aéronef multimoteur, il existe aussi des régimes de surpuissance en urgence, ces régimes étant utilisés lorsque l'un des moteurs tombe en panne. Ces régimes de surpuissance peuvent comprendre :
- un premier régime d'urgence associant une puissance de super urgence OEI30" à une durée d'utilisation de l'ordre de trente secondes, utilisable deux ou trois fois,
- un deuxième régime d'urgence associant une puissance maximale d'urgence OEI2' à une durée d'utilisation cumulée de l'ordre de deux minutes,
- un troisième régime d'urgence associant une puissance intermédiaire d'urgence OEIcontinu à une durée d'utilisation couvrant la fin d'un vol par exemple.

En parallèle, il est courant de déterminer le nombre d'heures de vol que peut supporter un moteur d'aéronef avant de devoir être révisé. Ce nombre d'heures de vol est connu sous l'acronyme TBO ou l'expression « time between overhaul » en langue anglaise.

Dans ces conditions, pour chaque régime, une puissance minimale garantie est établie. Cette puissance minimale garantie correspond à la puissance minimale que pourra fournir le moteur lorsqu'il aura atteint ledit nombre d'heures de vol TBO, un tel moteur étant dénommé « moteur vieilli » par commodité dans la suite du texte.

Les performances d'un aéronef dépendent de fait de la puissance pouvant être développée par chaque moteur. Toutefois, la puissance développée par un moteur tend à décroître dans le temps. Dès lors, pour garantir les performances requises indépendamment de l'ancienneté des moteurs d'un aéronef, les performances d'un aéronef peuvent être calculées sur la base des puissances minimales garanties alors que les performances de l'aéronef pourraient être évaluées à la hausse en présence de moteurs neufs.

Parmi ces performances, la consommation de carburant théorique d'un moteur est déterminée notamment sur la base de la consommation d'un moteur générique de référence, avec un niveau de vieillissement donné. Par exemple, un tel moteur de référence peut correspondre à un moteur neuf apte à fournir une puissance minimale garantie dite « mini neuf » ou à un moteur vieilli apte à fournir une puissance minimale garantie dite « mini vieilli ». Le manuel de vol d'un aéronef peut ainsi fournir un modèle donnant la consommation de carburant théorique du ou des moteurs en fonction du régime appliqué, cette consommation de carburant théorique étant égale à la consommation du moteur de référence. A l'aide de cette consommation théorique, un pilote peut alors évaluer la quantité de carburant à embarquer pour effectuer une mission, ou peut évaluer la distance franchissable en présence d'une certaine quantité de carburant et de la masse embarquée.

Comme cette méthode est avantageusement conservative, la consommation de carburant théorique est généralement supérieure à la consommation de carburant réel pour un moteur donné. En effet, un moteur neuf tend à consommer moins de carburant qu'un moteur vieilli. Dès lors, la prise en compte d'une consommation de carburant non pas réelle mais théorique, lors de l'élaboration d'un plan vol, peut tendre, par exemple, à surévaluer le volume de carburant à embarquer. Le surplus de carburant peut limiter la masse de la charge utile pouvant être emportée.

Par ailleurs, certains règlements de certification peuvent requérir des moyens pour vérifier que chaque moteur est à même de fournir les puissances minimales garanties permettant à l'aéronef d'atteindre les performances certifiées.

Afin de vérifier qu'un moteur fonctionne correctement, un contrôle de santé moteur est réalisé pour s'assurer que ce moteur développe une puissance supérieure ou égale à la puissance minimale garantie d'un régime donné. Dans l'affirmative, le moteur demeure à même de fournir les puissances requises pour atteindre les performances certifiées. A l'inverse, une action de maintenance non prévue doit être entreprise.

Par exemple, le contrôle de santé peut consister à mesurer la valeur courante d'un paramètre de surveillance, puis à vérifier que la valeur de la puissance courante développée par le moteur est supérieure ou égale à la valeur de la puissance minimale garantie qu'aurait un moteur vieilli en présence des mêmes conditions, à savoir à isovaleur du paramètre de surveillance.

Le paramètre de surveillance peut être une température du moteur, cette température pouvant être la température TET des gaz à l'entrée d'une turbine haute pression d'un générateur de gaz ou la température T45 des gaz à l'entrée d'une turbine libre d'un turbomoteur.

Les puissances minimales garanties sont usuellement établies en testant un moteur sur un banc d'essais. Pour comparer les résultats de mesures effectuées en vol avec des mesures effectuées sur un banc d'essais, les conditions de mesure en vol peuvent être optimisées afin d'être proches des conditions de mesure sur un banc d'essais. Les mesures effectuées sur un banc d'essais sont réalisées dans des conditions thermiquement stables. Dès lors, pour réaliser un contrôle de santé moteur en vol, l'aéronef peut être placé dans une phase de vol particulière telle qu'un vol en palier à altitude et vitesse stabilisées pendant plusieurs minutes. Le pilote peut alors lancer une action manuelle requérant la réalisation d'un contrôle de santé moteur ou encore un tel contrôle de santé moteur peut être réalisé automatiquement lorsque les conditions requises sont présentes.

En outre, pour évaluer la puissance courante développée par un moteur, des effets d'avionnage peuvent être pris en considération. Les effets d'avionnage engendrent une augmentation de la consommation carburant et des pertes de puissances dues par exemple à des pertes de charges dans les entrées d'air des moteurs ou encore à des distorsions de pressions. De plus, les effets d'avionnage incluent des pertes de puissance dues à des prélèvements de puissance réalisés sur le moteur par des accessoires et/ou à l'altitude de l'aéronef et/ou à la température extérieure notamment.

Ces effets d'avionnage tendent de fait à réduire la puissance développée par un arbre de sortie d'un moteur une fois installé sur un aéronef. Les effets d'avionnage sont alors aussi dénommés « pertes d'avionnage » en référence à la perte de puissance rencontrée. Ainsi, une perte de puissance correspondant aux pertes d'avionnage peut être évaluée pour déterminer la puissance courante du moteur en tant que telle. La puissance courante du moteur peut ainsi être égale à la somme de la perte de puissance et de la puissance mesurée en vol développée par un arbre de sortie du moteur installé sur un aéronef.

Les documents EP 2623747 B1, EP 2623748 B1 et EP 3730410 B1 évoquent des contrôles de santé moteur.

Le document EP3123254 B1 est connu, mais éloigné de la problématique de la détermination de la consommation de carburant réel d'un moteur.

Les documents EP 1 103 926 A2, RU 2 627 742 C2, et US 2018/119628 A1 sont aussi connus. Le document EP 1 103 926 A2 est notamment éloigné de la problématique de l'invention en ayant trait à un système pour déterminer la présence d'une panne d'un moteur. Les documents RU 2 627 742 C2, et US 2018/119628 A1 sont aussi éloignés de l'invention.

La présente invention a alors pour objet de proposer un procédé de détermination d'une marge de consommation de carburant d'un moteur par rapport à une consommation de carburant théorique, notamment afin d'optimiser un rayon d'action ou la charge utile pouvant être emportée dans l'aéronef.

Ainsi, l'invention vise un procédé de détermination d'une marge de consommation de carburant courante d'un moteur fonctionnel d'un aéronef par rapport à une consommation de carburant théorique d'un moteur de référence.

Ce procédé comporte une phase d'évaluation comprenant les étapes suivantes :
- réalisation en vol, lors d'au moins un vol de paramétrage de l'aéronef, d'au moins un contrôle de santé moteur comprenant au moins : i) mesure avec un senseur de température d'une valeur courante d'une température de surveillance du moteur fonctionnel, et ii) détermination avec un senseur de puissance d'une valeur de contrôle d'un paramètre de puissance dudit moteur fonctionnel,
- détermination en fonction au moins de la valeur de contrôle pour une même valeur courante de la température de surveillance du moteur fonctionnel, avec un modèle de consommation appliqué par un contrôleur, de ladite marge de consommation de carburant courante par rapport à la consommation de carburant théorique, la consommation de carburant théorique étant une consommation de carburant du moteur de référence déterminée en fonction de ladite valeur de contrôle,
- transmission à un récepteur de ladite marge de consommation de carburant courante.

L'expression « moteur fonctionnel » désigne un moteur de l'aéronef. Le terme « fonctionnel » est utilisé pour identifier ce moteur, et ne pas le confondre avec d'autres moteurs.

L'expression « moteur de référence » désigne un moteur du même modèle que le moteur fonctionnel, à savoir un moteur identique au moteur fonctionnel. Toutefois, le modèle de référence peut présenter une durée de vie sensiblement, voire strictement, égale à la durée de vie devant entraîner une révision, dite usuellement TBO.

Le contrôleur désigne un dispositif embarqué dans l'aéronef ou déporté en dehors de l'aéronef pour déterminer la marge de consommation de carburant courante d'un aéronef, par rapport à la consommation de carburant théorique du moteur de référence.

Selon ce procédé, le contrôleur reçoit la valeur courante d'une température du moteur fonctionnel à un endroit prédéterminé de ce moteur, cette température étant dénommée « température de surveillance ». Le contrôleur reçoit de plus la valeur de contrôle d'un paramètre de puissance du moteur fonctionnel. Ce paramètre de puissance peut être une puissance mécanique, cette puissance mécanique pouvant être égale à la puissance développée par le moteur éventuellement corrigée par l'ajout d'une puissance prédéterminée ou calculée correspondant à des effets d'avionnage. Le contrôleur en déduit la marge de consommation de carburant du moteur fonctionnel par rapport au moteur de référence pour un fonctionnement à iso-marge de puissance à la température de surveillance.

En effet, la température de surveillance a une incidence directe sur la consommation de carburant du moteur, notamment pour un turbomoteur. Pour comparer le fonctionnement du moteur fonctionnel et du moteur de référence, le contrôleur compare le fonctionnement de ce moteur fonctionnel et de ce moteur de référence en présence d'une même température de surveillance.

En outre, la consommation de carburant d'un moteur et la puissance développée par ce moteur varient de manière similaire, notamment pour un turbomoteur. Dès lors, un modèle de consommation peut être établi. Ce modèle de consommation permet d'obtenir la marge de consommation de carburant du moteur fonctionnel par rapport au moteur de référence. Par exemple, un moteur neuf peut avoir une marge de consommation de carburant de l'ordre de 2 à 6 % de la consommation de carburant théorique mesurée sur le moteur de référence.

Ainsi, un contrôleur peut, par exemple, utiliser un ou des contrôles de santé moteur précédemment réalisés afin d'évaluer la marge de consommation de carburant courante du moteur fonctionnel. Ce contrôleur émet alors un signal de commande porteur de cette marge de consommation de carburant courante vers un récepteur. Par exemple, un tel récepteur comporte un afficheur affichant la marge de consommation suite à la réception du signal de commande. Un pilote peut alors prendre en considération cette marge de consommation afin d'optimiser le carburant embarqué et/ou la masse de la charge utile embarquée.

En présence de plusieurs moteurs fonctionnels au sein d'un aéronef, le procédé peut être, par exemple, appliqué pour chaque moteur fonctionnel. La consommation totale en carburant de l'installation correspond alors à la somme des consommations de carburant individuelles des moteurs fonctionnels. Le procédé peut de plus comporter une ou plusieurs des caractéristiques qui suivent.

Selon une possibilité, le moteur fonctionnel et le moteur de référence peuvent être des turbomoteurs identiques, à savoir des modèles identiques, comprenant chacun un générateur de gaz et au moins une turbine libre. La température de surveillance peut alors être une température de gaz à l'entrée d'une turbine haute pression du générateur de gaz du moteur associé ou une température des gaz à l'entrée de la turbine libre du moteur associé.

Selon une possibilité compatible avec les précédentes, le paramètre de puissance peut être une puissance mécanique, ladite détermination en fonction au moins de la valeur de contrôle d'une marge de consommation de carburant courante comportant une détermination d'une marge de puissance intermédiaire entre la valeur de contrôle et une puissance minimale garantie obtenue avec le moteur de référence ayant ladite température de surveillance égale à la valeur courante.

La marge de puissance d'un moteur à iso-température de surveillance est en effet corrélée à la consommation de carburant. L'utilisation de la marge de puissance à iso-température de surveillance permet d'obtenir une méthode précise pour évaluer une marge de consommation de carburant. En effet, la puissance développée par un moteur peut être déterminée de manière précise, voire plus précise que la mesure d'un débit de carburant avec les débitmètres embarqués dans les aéronefs par exemple.

En outre, une telle puissance minimale garantie peut avantageusement tenir compte des effets d'avionnage réduisant la puissance développée par un arbre de sortie d'un moteur une fois installé sur un aéronef.

Eventuellement, ladite détermination en fonction au moins de la valeur de contrôle d'une marge de consommation de carburant courante peut alors comporter : i) détermination d'une marge de puissance de référence égale à la marge de puissance intermédiaire ou à une moyenne de plusieurs marges de puissance intermédiaires évaluées lors de plusieurs contrôles de santé moteur, ii) conversion de la marge de puissance de référence en la marge de consommation de carburant courante par le contrôleur avec ledit modèle de consommation.

Ladite moyenne peut, par exemple, être une moyenne arithmétique prenant en considération les n précédents contrôles de santé moteur, n étant un nombre entier positif prédéterminé.

En fonction de la précision recherchée, seul le dernier contrôle de santé moteur ou plusieurs contrôles de santé sont utilisés pour évaluer la marge de puissance courante par rapport au moteur de référence, et par suite la marge de consommation de carburant courante.

Eventuellement, ledit modèle de consommation peut fournir ladite marge de consommation de carburant courante en fonction de ladite marge de puissance de référence.

Selon une possibilité compatible avec les précédentes, le procédé peut comporter une phase d'initialisation comprenant une détermination dudit modèle de consommation.

La phase d'initialisation permet de déterminer le modèle de consommation utilisé par le contrôleur pour convertir une marge de puissance en une marge de consommation de carburant.

Selon une première alternative, la détermination dudit modèle de consommation peut comprendre :
- une pluralité de tests réalisés sur au moins un moteur de test agencé sur un banc d'essais, chaque test incluant une détermination d'une puissance développée par le moteur de test à un point de test ainsi que d'un débit de carburant consommé par le moteur de test au point de test et d'une valeur de test de la température de surveillance au point de test,
- pour chaque test, détermination d'une marge de puissance de paramétrage et d'une marge de consommation de carburant de paramétrage respectivement par rapport à une puissance minimale garantie à la valeur de test de la température de surveillance et une consommation de carburant théorique obtenues avec le moteur de référence en présence de la puissance développée par le moteur de test , et
- détermination du modèle de consommation en fonction de la marge de puissance de paramétrage et de la marge de consommation de carburant de paramétrage de chaque test.

Selon la première alternative, chaque point de test permet de déterminer la marge de consommation de carburant du moteur de test, dite « marge de consommation de carburant de paramétrage », en fonction de la marge de puissance du moteur de test, dite « marge de puissance de paramétrage ». La mesure d'un débit de carburant au banc est en effet fiable. A l'aide du nuage de points obtenu, un calculateur, et par exemple le contrôleur, peut déterminer par une méthode connue une loi donnant une marge de consommation de carburant en fonction de la marge de puissance. Par exemple, une méthode de régression linéaire permet de déterminer une fonction affine donnant une marge de consommation de carburant en fonction d'une marge de puissance. Le modèle de consommation prend alors la forme de cette fonction affine.

Selon une deuxième alternative, la détermination du modèle de consommation peut comprendre :
- une pluralité de tests réalisés sur au moins un moteur de test en vol, chaque test incluant une détermination d'une puissance développée par le moteur de test à un point de test ainsi que d'un débit de carburant consommé par le moteur de test au point de test et d'une valeur de test de la température de surveillance au point de test,
- pour chaque test, détermination d'un débit de carburant corrigé en fonction du débit de carburant consommé par le moteur de test au point de test et d'un modèle de correction,
- pour chaque test, détermination d'une marge de puissance de paramétrage et d'une marge de consommation de carburant de paramétrage respectivement par rapport à une puissance minimale garantie à la valeur de test de la température de surveillance et une consommation de carburant théorique obtenues avec le moteur de référence en présence de la valeur de test pour la puissance développée par le moteur de test,
- détermination du modèle de consommation en fonction de la marge de puissance de paramétrage et de la marge de consommation de carburant de paramétrage de chaque test.

Selon la deuxième alternative, les tests sont réalisés en vol, et non pas au banc. Le débit de carburant mesuré en vol est alors corrigé à l'aide d'un modèle de correction. Ce modèle de correction peut être établi, par exemple, en utilisant une méthode de régression linéaire ou polynomiale obtenue à partir des consommations de carburant précises mesurées au banc avec des débitmètres dédiés et simultanément avec un système de gestion embarqué dans l'aéronef généralement désigné par l'expression en langue anglaise « Full Autority Digital Engine Control » ou par son acronyme « FADEC ». Un tel modèle de correction permet ainsi de caractériser l'erreur d'estimation du FADEC par rapport aux débitmètres calibrés du banc de test et peut ensuite être utilisé en vol afin d'améliorer la précision des mesures de débit de carburant fournies par le FADEC.

Selon un autre aspect, l'invention vise aussi un procédé de remplissage en carburant d'un aéronef pour rallier une destination, ledit procédé comprenant une élaboration d'une route comprenant au moins un segment de vol.

Ce procédé de remplissage en carburant d'un aéronef pour rallier une destination comprend les étapes suivantes :
- pour au moins ledit segment du plan de vol, détermination d'une marge de consommation de carburant courante en appliquant le procédé de détermination d'une marge de consommation de carburant d'un moteur par rapport à une consommation de carburant théorique précédemment décrit, ledit au moins un contrôle de santé moteur étant réalisé lors d'un vol précédent ladite élaboration d'une route comprenant au moins un segment de vol,
- détermination d'une consommation de carburant théorique lors dudit segment de vol à partir du modèle théorique établi avec ledit moteur de référence,
- détermination d'une consommation de carburant prédite comprenant une application de la marge de consommation de carburant courante à la consommation de carburant théorique,
- détermination d'une quantité nécessaire de carburant, à savoir d'un volume de carburant nécessaire ou d'une masse de carburant nécessaire en fonction de la consommation de carburant prédite,
- transmission de la quantité nécessaire de carburant.

Le procédé peut ensuite comprendre une étape de remplissage de l'aéronef en carburant, ladite quantité nécessaire de carburant étant disposée dans l'aéronef avant le début de la mission.

L'expression « quantité nécessaire de carburant » désigne une quantité de carburant suffisante pour assurer le vol planifié.

Ainsi, ce procédé permet de déterminer la quantité de carburant suffisante pour suivre une route, par exemple pour optimiser la charge utile de l'aéronef.

L'invention vise aussi un aéronef muni d'au moins un moteur fonctionnel. Cet aéronef comporte un système de planification configuré pour appliquer le procédé de détermination d'une marge de consommation de carburant courante précité, ledit système de planification comprenant ledit contrôleur ainsi que ledit senseur de puissance et ledit senseur de température, ledit système de planification ayant un récepteur recevant ladite marge de consommation de carburant courante déterminée par ledit contrôleur.

L'invention et ses avantages apparaîtront avec plus de détails dans le cadre de la description qui suit avec des exemples donnés à titre illustratif en référence aux figures annexées qui représentent :
la figure 1, une vue d'un aéronef configuré pour appliquer le procédé de détermination d'une marge de consommation de carburant courante,
la figure 2, un schéma illustrant le procédé de détermination d'une marge de consommation de carburant courante,
la figure 3, un schéma illustrant un modèle de consommation, et
la figure 4, un schéma illustrant un procédé de remplissage en carburant d'un aéronef selon l'invention.

Les éléments présents dans plusieurs figures distinctes sont affectés d'une seule et même référence.

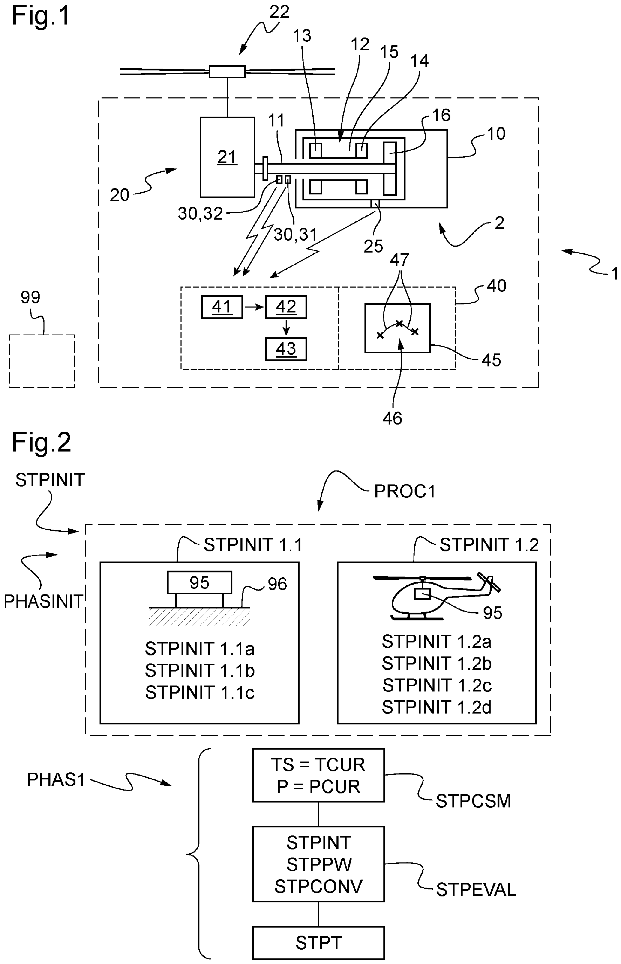

La figure 1 présente un aéronef 1 selon l'invention. Un tel aéronef 1 est muni d'une installation motrice 2 comprenant au moins un moteur fonctionnel 10. Le ou les moteurs fonctionnels 10 comprennent chacun un arbre de travail 11 relié à une chaîne mécanique 20. Par exemple, cette chaîne mécanique 20 comprend un rotor 22 participant au moins à la sustentation et/ou à la propulsion ou à la traction de l'aéronef 1. Selon l'exemple illustré, au moins un moteur fonctionnel 10 comporte un arbre connecté par une liaison mécanique à une boîte de transmission de puissance 21, cette boîte de transmission de puissance 21 étant connectée par une autre liaison mécanique à un rotor 22.

Selon un autre aspect, le ou les moteurs fonctionnels 10 peuvent être des turbomoteurs. Un tel turbomoteur comporte alors un générateur de gaz 12 muni d'un compresseur 13 comprenant un ou des étages de compression, d'une chambre de combustion 15 et d'au moins une turbine haute pression 14. La ou les turbines haute pression 14 sont reliées par un arbre interne au compresseur 13. A la suite du générateur de gaz 12 selon le sens de circulation des gaz dans le moteur fonctionnel 10, le moteur fonctionnel 10 comporte un ensemble libre muni d'au moins une turbine libre 16 solidaire de l'arbre de travail 11.

Par ailleurs, les performances de l'aéronef sont établies sur la base des performances d'un moteur de référence 99 qui n'est pas installé sur l'aéronef 1. Le moteur fonctionnel 10 et le moteur de référence 99 ont des performances qui diffèrent, et présentent notamment des débits de carburant qui diffèrent en raison de leurs durées d'utilisation respectives. A un même niveau de puissance et dans les mêmes conditions, le débit de carburant alimentant le moteur de référence 99 est supérieur ou égal au débit de carburant alimentant le moteur fonctionnel 10 potentiellement moins utilisé.

Cet aéronef 1 coopère avec un système de planification 40 configuré notamment pour déterminer la consommation de carburant réelle du moteur fonctionnel 10 avant un vol, cette consommation de carburant étant dénommée « consommation de carburant courante DQ » par commodité et représentant un débit de carburant fourni au moteur fonctionnel 10.

Ce système de planification 40 comporte un senseur de température 25 configuré pour mesurer une température dans le moteur fonctionnel 10, un senseur de puissance configuré pour évaluer une puissance développée par le moteur fonctionnel 10, et un contrôleur 42 configuré pour déterminer la consommation de carburant courante en prenant en considération la température mesurée et la puissance mesurée.

Le terme « senseur » désigne un capteur capable de mesurer directement le paramètre en question mais aussi un système pouvant comprendre un ou plusieurs capteurs ainsi que des moyens de traitement du signal permettant de fournir une estimation du paramètre en question à partir des mesures fournies par ce ou ces capteurs physiques.

La figure 1 illustre un exemple d'architecture d'aéronef afin d'illustrer l'invention. D'autres architectures d'aéronefs connues sont bien évidemment utilisables sans sortir du cadre de l'invention.

Ainsi, le senseur de température 25 peut être un senseur usuel agencé au sein du moteur fonctionnel 10. Le senseur de température 25 émet un signal porteur d'une température de surveillance TS au sein du moteur fonctionnel 10.

Le terme « signal » désigne dans la description un signal numérique ou analogique, optique ou électrique par exemple.

Le senseur de température 25 peut être positionné de manière à mesurer une température de surveillance de type « température d'entrée de turbine TET », en étant disposé à l'entrée de l'ensemble libre, ou de type « température T45 », en étant disposé à l'entrée d'une turbine haute pression 14.

En outre, le senseur de puissance 30 peut être un senseur usuel configuré pour mesurer une puissance image d'une puissance développée par le moteur fonctionnel 10. Par exemple, le senseur de puissance 30 comporte un capteur de vitesse 31 et un couplemètre 32 agencés sur un arbre de mesure mis en mouvement par la ou les turbines basse pression 16. Par exemple, l'arbre de mesure peut être l'arbre de travail 11. Le capteur de vitesse 31 émet un signal de vitesse porteur d'une vitesse de rotation de l'arbre de mesure, et le couplemètre 32 émet un signal de couple porteur du couple exercé sur l'arbre de mesure. Un calculateur usuel peut alors déterminer la puissance développée en effectuant le produit de la vitesse de rotation et du couple mesurés, voire d'un coefficient de proportionnalité, et éventuellement en corrigeant ce produit avec des pertes d'avionnage calculées ou fixes.

Eventuellement, le système de planification 40 peut comporter une mémoire mémorisant les signaux émis par le senseur de puissance 30 et le senseur de température 25, ou les valeurs des températures et puissances mesurées voire décodées par un calculateur usuel.

Le contrôleur 42 peut être agencé dans l'aéronef 1 selon l'exemple illustré, ou peut être déporté en dehors de l'aéronef 1. Le contrôleur 42 peut recevoir le signal émis par le senseur de température 25 ainsi que le ou les signaux émis par le senseur de puissance 30 afin de les recevoir et les décoder et en déduire la température de surveillance et la puissance mesurées. Alternativement, le contrôleur 42 peut être relié à la mémoire 41, cette mémoire 41 mémorisant la température de surveillance et la puissance mesurées.

Le contrôleur 42 peut posséder une ou plusieurs unités de traitement comprenant par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un m icrocontrôleur...

Le contrôleur 42 peut être relié par une liaison filaire ou non filaire à un récepteur 43. Ce récepteur 43 peut, par exemple, prendre la forme d'un afficheur. Le récepteur 43 peut être agencé dans ou en dehors de l'aéronef 1.

Le contrôleur 42 peut être relié par une liaison filaire ou non filaire à un planificateur 45. Le planificateur 45 peut être agencé dans ou en dehors de l'aéronef 1. Ce planificateur 45 peut, par exemple, comprendre un afficheur et une interface homme-machine permettant de paramétrer des données afin d'établir une route 46. Une telle route 46 peut comprendre au moins un segment 47 de vol entre deux points de passage. Par exemple, les données paramétrables comprennent un point d'arrivée à rallier avec l'aéronef 1, un point de départ du vol, un ou des points de passage intermédiaires...

Par ailleurs, l'aéronef 1 et le système de planification 40 sont configurés pour appliquer le procédé PROC1 de détermination d'une marge de consommation de carburant courante DQ de l'aéronef 1 illustré sur la figure 2.

Ce procédé PROC1 de détermination d'une marge de consommation de carburant courante DQ peut comporter une phase d'initialisation PHASINI. Cette phase d'initialisation PHASINI comprend une détermination STPINI d'un modèle de consommation.

Selon une première alternative, la détermination STPINI d'un modèle de consommation comprend une pluralité de tests STPINI1.1 réalisés sur au moins un moteur de test 95 agencé sur un banc d'essais 96. Chaque test inclut une détermination STPINI1.1a :
- d'une puissance PINI développée par le moteur de test 95 à un point de test, à savoir à un instant de mesure, en sollicitant un senseur de puissance du type décrit précédemment,
- d'un débit de carburant QINI consommé par le moteur de test 95 au point de test, en utilisant un débitmètre usuel, et
- et d'une valeur de test TINI de la température de surveillance TS au point de test, en sollicitant un senseur de température du type décrit précédemment.

Pour chaque test réalisé, la détermination STPINI dudit modèle de consommation comporte une détermination STPINI1.1b, avec une unité de traitement dénommée « calculateur de modélisation » par commodité, d'une marge de puissance de paramétrage DPINI et d'une marge de consommation de carburant de paramétrage DQINI respectivement par rapport à une puissance minimale garantie PMINI pour la même valeur de test TINI et une consommation de carburant théorique Qref obtenues avec le moteur de référence 99 en présence de la valeur de test TINI pour la puissance mesurée à la température de surveillance TS.

A titre illustratif, la valeur de test est relative à la température T45 et est égale à 900 degrés Celsius, le débit de carburant QINI consommé est égal à 200 litres par heure et la puissance PINI est égale à 600 Kilowatts. Le calculateur de modélisation peut mémoriser un tableau ou un équivalent fournissant la puissance minimale garantie PMINI et la consommation de carburant théorique Qref en fonction respectivement de la température de surveillance TS et de la puissance mesurée, ces données étant établies lors d'essais sur un moteur de référence 99. Par exemple, pour une température T45 de 900 degrés Celsius, la puissance Pmini est égale à 500 Kilowatts, et pour une puissance PINI de 600 kW, le débit de carburant Qref est égal à 210 litres par heure. Dès lors, la marge de puissance de paramétrage DPINI est égale à 600-500 soit 100 Kilowatts et la marge de consommation de carburant de paramétrage DQINI est alors de 10 litres par heure voire peut être exprimée en pourcentage du débit de carburant Qref soit 4.76%.

Dès lors, la détermination STPINI dudit modèle de consommation comporte une détermination STPINI1.1c du modèle de consommation en fonction de la marge de puissance de paramétrage DPINI et de la marge de consommation de carburant de paramétrage DQINI de chaque test.

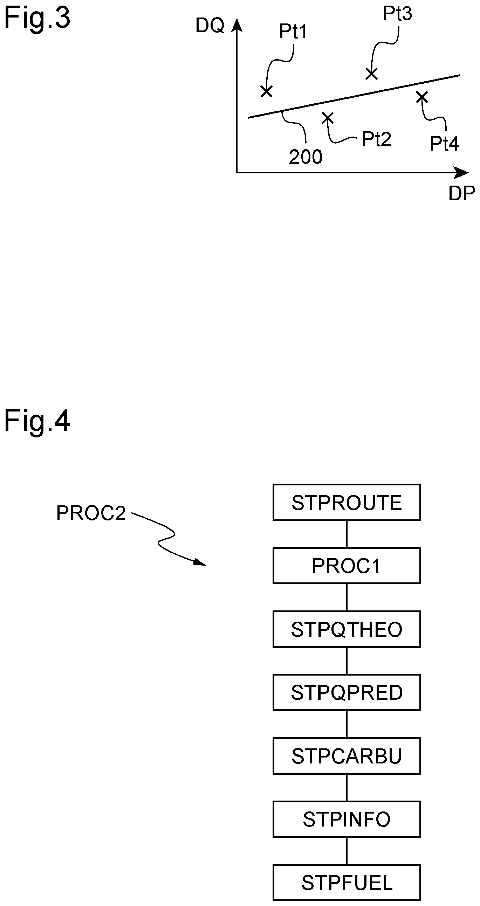

Selon la figure 3, chaque point de test peut être reporté dans un diagramme comprenant une marge de puissance DP en abscisse et une marge de consommation de carburant DQ en ordonnée. Selon l'exemple illustré, quatre tests sont réalisés. Dès lors, quatre points Pt1-Pt4 sont disposés dans le diagramme, chaque point ayant pour coordonnées la marge de puissance de paramétrage DPINI et la marge de consommation de carburant de paramétrage DQINI déterminés lors d'un test. Le calculateur de modélisation peut alors par exemple établir l'équation d'une droite 200 de manière usuelle typiquement par régression linéaire, cette équation formant le modèle de consommation.

Selon une deuxième alternative, la détermination STPINI du modèle de consommation comprend une pluralité de tests STPINI1.2 réalisés en vol sur au moins un moteur de test 95 agencé sur un aéronef. Chaque test inclut une détermination STPINI1.2a :
- d'une puissance PINI développée par le moteur de test 95 à un point de test, à savoir à un instant de mesure, en sollicitant un senseur de puissance du type décrit précédemment,
- d'un débit de carburant QINI consommé par le moteur de test 95 au point de test, en utilisant un débitmètre usuel, et
- d'une valeur de test TINI de la température de surveillance TS au point de test, en sollicitant un senseur de température du type décrit précédemment.

De plus, une unité de traitement dénommée « calculateur de modélisation » par commodité effectue une détermination STP1.2b d'un débit de carburant corrigé QCOR en fonction du débit de carburant QINI consommé par le moteur de test 95 au point de test et d'un modèle de correction. Le modèle de correction peut être établi par essais ou simulation pour ajuster le débit de carburant mesuré par le débitmètre de l'aéronef par rapport à un débitmètre plus précis.

Pour chaque test réalisé, la détermination STPINI dudit modèle de consommation comporte une détermination STPINI1.2c, avec un calculateur de modélisation par exemple, d'une marge de puissance de paramétrage DPINI par rapport à une puissance minimale garantie PMINI, et d'une marge de consommation de carburant de paramétrage DQINI entre le débit de carburant corrigé QCOR et la consommation de carburant théorique Qref.

Dès lors, la détermination STPINI dudit modèle de consommation comporte une détermination STPINI1.2d du modèle de consommation en fonction de la marge de puissance de paramétrage DPINI et de la marge de consommation de carburant de paramétrage DQINI de chaque test. Cette étape peut être identique à l'étape correspondante de la première alternative.

Indépendamment de la manière d'établir le modèle de consommation, le procédé PROC1 de détermination d'une marge de consommation de carburant courante DQ comporte une phase d'évaluation PHAS1.

La phase d'évaluation PHAS1 comprend une réalisation STPCSM, en vol à savoir quand l'aéronef 1 ne repose pas sur une aire d'atterrissage d'au moins un contrôle de santé moteur. Ce contrôle de santé moteur est effectué, par exemple de manière usuelle, à iso-température de surveillance TS. Le contrôle de santé moteur peut être réalisé automatiquement ou sur commande via la manoeuvre d'une interface homme-machine.

Le ou les contrôles de santé moteur comprennent alors au moins : i) la mesure avec le senseur de température 25 d'une valeur courante TCUR de la température de surveillance TS du moteur fonctionnel 10, et ii) la détermination avec le senseur de puissance 30 d'une valeur de contrôle PCUR d'un paramètre de puissance P du moteur fonctionnel 10.

Avant un vol, la phase d'évaluation comporte la détermination STPEVAL en fonction au moins de la valeur de contrôle PCUR, avec le modèle de consommation appliqué par le contrôleur 42, de la marge de consommation de carburant courante DQ du moteur fonctionnel 10 par rapport à sa consommation de carburant théorique Qref, à savoir par rapport à la consommation de carburant du moteur de référence 99 à iso-puissance à la température de surveillance TS.

Par exemple, le contrôleur 42 détermine durant une étape STPINT une marge de puissance intermédiaire DPINT entre la valeur de contrôle PCUR et la puissance minimale garantie PMINI obtenue avec le moteur de référence 99 à iso-température de surveillance TS.

Le contrôleur 42 peut déterminer durant une étape STPPW une marge de puissance de référence DPREF, égale selon la variante à la marge de puissance intermédiaire DPINT ou à une moyenne de plusieurs marges de puissance intermédiaires DPINT évaluées lors de plusieurs contrôles de santé moteur CSM précédents. Le contrôleur 42 convertit alors, durant une étape STPCONV, la marge de puissance de référence DPREF en une marge de consommation de carburant courante DQ avec ledit modèle de consommation. Selon l'exemple de la figure 3, la marge de puissance de référence DPREF est injectée à cet effet dans l'équation de la droite déterminée durant la phase d'initialisation.

Enfin, lors d'une étape de transmission STPT, le contrôleur 42 émet un signal porteur de la marge de consommation de carburant courante DQ vers le récepteur 43. Ce récepteur 43 peut ensuite par exemple, afficher la marge de consommation de carburant courante. Un pilote peut alors adapter le carburant à embarquer dans l'aéronef 1 en fonction de cette marge.

La figure 4 illustre ainsi un procédé PROC2 de remplissage en carburant de l'aéronef 1 pour rallier une destination.

Ce procédé comporte une élaboration STPROUTE d'une route 46 comprenant au moins un segment 47 de vol, par exemple avec le planificateur 45.

Pour au moins un segment 47 du plan de vol, le contrôleur 42 détermine alors la marge de consommation de carburant courante DQ du ou des moteurs fonctionnels 10 de l'aéronef 1 en appliquant le procédé PROC1 de détermination d'une marge de consommation de carburant courante, en utilisant les données estimées lors d'au moins un contrôle de santé moteur CSM réalisé lors d'un vol précédent.

Le contrôleur 42 ou le planificateur 45 détermine, lors d'une étape STPQTHEO, une consommation de carburant théorique Qref pour ce même segment 47 de vol à partir d'un modèle théorique mémorisé du moteur de référence 99.

Le contrôleur 42 ou le planificateur 45 détermine, lors d'une étape STPQPRED une consommation de carburant prédite QPRED en appliquant la marge de consommation de carburant courante DQ à la consommation de carburant théorique Qref. A titre illustratif, la consommation de carburant théorique Qref est de 150 litres par heure et la marge de consommation de carburant courante déterminée est de 3% de cette consommation de carburant théorique Qref. Dès lors, la consommation de carburant prédite QPRED est de 150 divisée 1.03 soit 146.7 litres par heure.

Par suite, le contrôleur 42 ou le planificateur 45 détermine, lors d'une étape STPCARBU, un volume de carburant nécessaire ou une masse de carburant nécessaire en fonction de la consommation de carburant prédite pour rallier la destination.

Le contrôleur 42 ou le planificateur 45 transmet, par exemple au récepteur 43 ou à un autre afficheur, le volume de carburant nécessaire ou de la masse de carburant nécessaire.

Ainsi, le procédé peut comporter une transmission STPINFO de la quantité nécessaire de carburant au récepteur 43 puis un remplissage STPFUEL de l'aéronef 1, à savoir d'au moins un réservoir, en stockant dans l'aéronef 1 le volume de carburant nécessaire ou la masse de carburant nécessaire.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé (PROC1) de détermination d'une marge de consommation de carburant courante (DQ) d'un moteur fonctionnel (10) d'un aéronef (1) par rapport à une consommation de carburant théorique (Qref) d'un moteur de référence (99),
**caractérisé en ce que** le procédé comporte une phase d'évaluation (PHAS1) comprenant les étapes suivantes :
- réalisation (STPCSM) en vol, lors d'au moins un vol de paramétrage de l'aéronef, d'au moins un contrôle de santé moteur comprenant au moins : i) mesure avec un senseur de température (25) d'une valeur courante (TCUR) d'une température de surveillance (TS) du moteur fonctionnel (10), et ii) détermination avec un senseur de puissance (30) d'une valeur de contrôle (PCUR) d'un paramètre de puissance (P) dudit moteur fonctionnel (10),
- détermination (STPEVAL) en fonction au moins de la valeur de contrôle (PCUR), pour une même valeur courante (TCUR) de la température de surveillance (TS) du moteur fonctionnel (10) et avec un modèle de consommation appliqué par un contrôleur (42), de ladite marge de consommation de carburant courante (DQ) par rapport à la consommation de carburant théorique (Qref), la consommation de carburant théorique (Qref) étant une consommation de carburant du moteur de référence (99) déterminée en fonction de ladite valeur de contrôle (PCUR) ,
- transmission (STPT) à un récepteur (43) de ladite marge de consommation de carburant courante (DQ).

2. Procédé selon la revendication 1,
**caractérisé en ce que** ledit moteur fonctionnel (10) et ledit moteur de référence (99) étant des turbomoteurs identiques comprenant chacun un générateur de gaz (12) et au moins une turbine libre (16), ladite température de surveillance (TS) est une température de gaz à l'entrée d'une turbine haute pression (14) du générateur de gaz (12) du moteur associé ou une température des gaz à l'entrée de la turbine libre (16) du moteur associé.

3. Procédé selon l'une quelconque des revendications 1 à 2,
**caractérisé en ce que** le paramètre de puissance est une puissance mécanique, ladite détermination (STPEVAL) en fonction au moins de la valeur de contrôle (PCUR) d'une marge de consommation de carburant courante (DQ) comportant une détermination (STPINT) d'une marge de puissance intermédiaire (DPINT) entre la valeur de contrôle (PCUR) et une puissance minimale garantie (PMINI) obtenue avec le moteur de référence (99) ayant ladite température de surveillance (TS) égale à la valeur courante (TCUR).

4. Procédé selon la revendication 3,
**caractérisé en ce que** ladite détermination (STPEVAL) en fonction au moins de la valeur de contrôle (PCUR) d'une marge de consommation de carburant courante (DQ) comporte : i) détermination (STPPW) d'une marge de puissance de référence (DPREF) égale à la marge de puissance intermédiaire (DPINT) ou à une moyenne de plusieurs marges de puissance intermédiaires (DPINT) évaluées lors de plusieurs contrôles de santé moteur (CSM), ii) conversion (STPCONV) de la marge de puissance de référence (DPREF) en la marge de consommation de carburant courante (DQ) par le contrôleur (42) avec ledit modèle de consommation .

5. Procédé selon la revendication 4,
**caractérisé en ce que** ledit modèle de consommation fournit ladite marge de consommation de carburant courante (DQ) en fonction de ladite marge de puissance de référence (DPREF).

6. Procédé selon l'une quelconque des revendications 1 à 5,
**caractérisé en ce que** ledit procédé comporte une phase d'initialisation (PHASINI) comprenant une détermination (STPINI) dudit modèle de consommation.

7. Procédé selon la revendication 6,
**caractérisé en ce que** ladite détermination (STPINI) dudit modèle de consommation comprend :
- une pluralité de tests (STPINI1.1) réalisés sur au moins un moteur de test (95) agencé sur un banc d'essais (96), chaque test incluant une détermination (STPINI1.1a) d'une puissance (PINI) développée par le moteur de test (95) à un point de test ainsi que d'un débit de carburant (QINI) consommé par le moteur de test (95) au point de test et d'une valeur de test (TINI) de la température de surveillance (TS) au point de test,
- pour chaque test, détermination (STPINI1.1.b) d'une marge de puissance de paramétrage (DPINI) et d'une marge de consommation de carburant de paramétrage (DQINI) respectivement par rapport à une puissance minimale garantie (PMINI) à ladite valeur de test (TINI) de la température de surveillance (TS) et une consommation de carburant théorique (Qref) obtenues avec le moteur de référence (99) en présence de ladite puissance (PINI) développée par ledit moteur de test (95),
- détermination (STPINI1.1c) du modèle de consommation en fonction de la marge de puissance de paramétrage (DPINI) et de la marge de consommation de carburant de paramétrage (DQINI) de chaque test.

8. Procédé selon la revendication 6,
**caractérisé en ce que** ladite détermination (STPINI1.2) dudit modèle de consommation comprend :
- une pluralité de tests (STPINI1.2.a) réalisés sur au moins un moteur de test (95) en vol, chaque test incluant une détermination (STP1.2.a) d'une puissance (PINI) développée par le moteur de test (95) à un point de test ainsi que d'un débit de carburant (QINI) consommé par le moteur de test (95) au point de test et d'une valeur de test (TINI) de la température de surveillance (TS) au point de test,
- pour chaque test, détermination (STP1.2.d) d'un débit de carburant corrigé (QCOR) en fonction du débit de carburant (QINI) consommé par le moteur de test (95) au point de test et d'un modèle de correction,
- pour chaque test, détermination (STPINI1.2.b) d'une marge de puissance de paramétrage (DPINI) et d'une marge de consommation de carburant de paramétrage (DQINI) respectivement par rapport à une puissance minimale garantie (PMINI) à ladite valeur de test (TINI) de la température de surveillance (TS) et une consommation de carburant théorique (Qref) obtenues avec le moteur de référence (99) en présence de ladite puissance (PINI) développée par ledit moteur de test (95),
- détermination (STP1.2.c) du modèle de consommation en fonction de la marge de puissance de paramétrage (DPINI) et de la marge de consommation de carburant de paramétrage (DQINI) de chaque test.

9. Procédé (PROC2) de remplissage en carburant d'un aéronef (1) pour rallier une destination, ledit procédé comprenant une élaboration (STPROUTE) d'une route (46) comprenant au moins un segment (47) de vol,
**caractérisé en ce que** le procédé de remplissage en carburant d'un aéronef (1) pour rallier une destination comprend les étapes suivantes :
- pour au moins ledit segment (47) du plan de vol, détermination d'une marge de consommation de carburant courante (DQ) en appliquant le procédé (PROC1) selon l'une quelconque des revendications 1 à 8, ledit au moins un contrôle de santé moteur étant réalisé lors d'un vol précédent ladite élaboration d'une route comprenant au moins un segment de vol,
- détermination (STPQTHEO) d'une consommation de carburant théorique (Qref) lors dudit segment (47) de vol à partir d'un modèle théorique établi avec ledit moteur de référence (99),
- détermination (STPQPRED) d'une consommation de carburant prédite (QPRED) comprenant une application de la marge de consommation de carburant courante (DQ) à la consommation de carburant théorique (Qref),
- détermination (STPCARBU) d'une quantité nécessaire de carburant en fonction de la consommation de carburant prédite,
- transmission (STPINFO) de la quantité nécessaire de carburant.

10. Aéronef (1) muni d'au moins un moteur fonctionnel (10),
**caractérisé en ce que** ledit aéronef (1) comporte un système de planification (40) configuré pour appliquer le procédé de détermination d'une marge de consommation de carburant courante selon l'une quelconque des revendications 1 à 8, ledit système de planification (40) comprenant ledit contrôleur (42) ainsi que ledit senseur de puissance (30) et ledit senseur de température (25), ledit système de planification (40) ayant un récepteur (43) recevant ladite marge de consommation de carburant courante (DQ) déterminée par ledit contrôleur (42).
